# EUROPÄISCHE PATENTANMELDUNG

(11) **EP 1 433 373 A2**
(43) Veröffentlichungstag der Anmeldung: **30.06.2004**
(21) Anmeldenummer: 04101376.4
(22) Anmeldetag: 20.06.2000
(51) Int. Cl.: A01F 12/24

(54) **Dreschkorb**

(30) Priorität: 07.07.1999 US 348848
(62) Teilanmeldung aus: 00112930.3
(71) Anmelder: DEERE & COMPANY, Moline, Illinois 61265-8098 (US)
(72) Erfinder: Heim, Daniel Marc, Moline Illinois 61265 (US); Ramp, Benjamin Earl, Geneseo Illinois 61254 (US)
(74) Vertreter: Holst, Sönke, Dr.

(57) **Zusammenfassung**

Die Erfindung bezieht sich auf einen Dreschkorb (36) für eine Gutbearbeitungseinheit (24), mit einer Reihe voneinander beabstandeter, parallel orientierter Stäbe (60, 62, 70), zwischen denen Öffnungen (64) vorhanden sind, durch die Getreide hindurch strömen kann. Um die Drescheigenschaften zu verbessern, sind zwischen den Stäben (60, 62) herausnehmbare Drähte (70) angeordnet.

## Beschreibung

Die Erfindung betrifft einen Dreschkorb für eine Gutbearbeitungseinheit, mit einer Reihe voneinander beabstandeter, parallel orientierter Stäbe, zwischen denen Öffnungen vorhanden sind, durch die Getreide hindurch strömen kann.

Landwirtschaftliche Mähdrescher sind große Maschinen, die landwirtschaftliches Erntegut ernten, dreschen, trennen und reinigen. Das gewonnene saubere Getreide wird in einem am Mähdrescher angeordneten Korntank gespeichert. Das saubere Getreide kann dann vom Korntank durch einen Entladeschneckenförderer auf einen Lastwagen, Anhänger oder in ein anderes Aufnahmegefäß verbracht werden.

Es gibt zwei Grundtypen von Mähdreschern: (1) einen konventionellen Mähdrescher mit einer quer angeordneten Dreschtrommel, der eine Trenneinrichtung zum Trennen des gedroschenen Gutes folgt, und (2) einen Axialflussmähdrescher mit einem Rotor, der ein Gehäuse mit darin angeordnetem Rotor aufweist, um das Erntegut sowohl zu dreschen als auch zu trennen.

Die quer orientierte Dreschtrommel ist in kleinem Abstand zu einem Dreschkorb angeordnet. Die Dreschtrommel drischt das Erntegut im Zusammenwirken mit dem Dreschkorb. Der Dreschkorb umfasst im Allgemeinen eine Reihe gerader Stäbe, die sich parallel zur Drehachse der Dreschtrommel erstrecken. Gekrümmte Drähte durchdringen die Stäbe und erstrecken sich um den Umfang des Dreschkorbs. Ein Dreschkorb dieses Typs bildet ein Rost, durch das der größte Teil des gedroschenen Getreides und der Spreu auf einen Sammler-Zusammenbau fallen, von dem sie dem Reinigungssystem des Mähdreschers zugeführt werden. Die US 4 909 772 A offenbart einen derartigen Dreschkorb.

Axialflussmähdrescher haben eine rotierende Gutbearbeitungseinheit, die aus einem Rotor und einem den Rotor umhüllenden Gehäuse gebildet wird. Die rotierende Gutbearbeitungseinheit hat einen Einlassübergangsabschnitt, um Erntegut aus dem Schrägförderer in die rotierende Gutbearbeitungseinheit hinein zu ziehen. Die rotierende Gutbearbeitungseinheit umfasst einen Dreschabschnitt, um das Erntegut zu dreschen und einen Trennabschnitt, um das Getreide vom gedroschenen Erntegut zu trennen. Der Boden des Gehäuses ist mit einer Reihe von Rosten versehen, durch die das Getreide und die Spreu aus dem Gehäuse heraus fallen. Die nahe dem Dreschabschnitt der rotierenden Gutbearbeitungseinheit angeordneten Roste umfassen einen Dreschkorb. Ein derartiger Dreschkorb ist in der US 4 499 908 A offenbart. In dieser Patentschrift wird vorgeschlagen, eine Seite des Dreschkorbs schwenkbar an der Gutbearbeitungseinheit zu befestigen und die andere Seite einstellbar an der Gutbearbeitungseinheit anzubringen, um den Abstand zwischen dem Dreschkorb und dem Rotor steuern zu können.

Erntegut, insbesondere grünes oder in hohem Volumen eingezogenes Erntegut, neigt dazu, den Dreschkorb zu verstopfen, wodurch verhindert wird, dass Getreide durch den Dreschkorb hindurch strömt, so dass die Kapazität und das Dreschvermögen vermindert wird. Außerdem ist es bei einigen Axialmähdreschern nötig, zwischen zwei unterschiedlichen Dreschkörben mit verschieden großen Öffnungen zu wechseln, wenn zwischen Erntevorgängen von Erntegütern mit kleinen bzw. großen Körnern gewechselt wird.

Die der Erfindung zu Grunde liegende Aufgabe wird darin gesehen, einen verbesserten Dreschkorb bereit zu stellen. Insbesondere soll ein Verstopfen des Dreschkorbs bei einem weiten Bereich von Erntegütern und Erntegutbedingungen vermieden werden.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, zusätzliche gerade Drähte zwischen den Stäben anzubringen, die parallel zu letzteren verlaufen. Die Drähte vermindern die Öffnungsgröße des Dreschkorbs, falls er bei Getreide mit kleinen Körnern eingesetzt wird. Die Drähte sind vorzugsweise einzeln entfernbar, was eine große Anzahl möglicher Kombinationen von Anordnungen der Drähte zur Folge hat, so dass es möglich wird, den Separationspegel des Dreschkorbs zu variieren, um die Effizienz des Mähdreschers bei spezifischen Erntebedingungen zu optimieren. Durch das Hinzufügen oder Entnehmen von Drähten kann derselbe Dreschkorb optimal bei Getreide mit großen oder kleinen Körnern verwendet werden. Dadurch erübrigen sich unterschiedliche Dreschkörbe für verschiedene Erntegüter.

Weiterhin wird vorgeschlagen, den Dreschkorb mit Stäben unterschiedlichen Querschnitts auszustatten. Zwischen den Stäben sind Öffnungen definiert, durch die das ausgedroschene Getreide hindurch strömen kann. Durch die Kombination von Stäben unterschiedlichen Querschnitts können Stäbe mit verschiedenen Drescheigenschaften kombiniert werden, die sich in vorteilhafter Weise ergänzen. Im konkreten werden gerade Stäbe mit rechteckigen und runden (z.B. kreisförmigen) Querschnitten miteinander kombiniert. Die runden Stäbe haben eine abgerundete Dreschoberfläche, die geeignet ist, beliebiges Erntegut räumlich zu verteilen, während die rechteckigen Stäbe flache Oberflächen aufweisen, um eine aggressiv wirkende Dreschkante bereit zu stellen.

Die Stäbe mit rechteckigem und mit rundem Querschnitt sind vorzugsweise in alternierender Reihenfolge angeordnet. Jedoch sind auch beliebige andere Reihenfolgen denkbar.

Um vorteilhafte Drescheigenschaften zu erzielen, wird vorgeschlagen, die Stäbe mit rechteckigem Querschnitt derart anzubringen, dass ihre inneren, dem Rotor bzw. der Dreschtrommel zugewandten Oberflächen eine gewölbte innere Fläche definieren. Die Stäbe mit rundem Querschnitt sind dann vorzugsweise derart positioniert, dass die Tangenten der dem Rotor bzw. der Dreschtrommel zugewandten Oberflächen der Stäbe in der gewölbten inneren Fläche liegen. Der Abstand zwischen der Drehachse des Rotors bzw. der Dreschtrommel und der ihr zugewandten Oberfläche der Stäbe ist somit für alle Stäbe gleich, unabhängig von ihrem Querschnitt.

Der Dreschkorb kann aus einem oder mehreren Abschnitten aufgebaut sein. Ein derartiger Abschnitt weist vorzugsweise einen Rahmen mit gekrümmten Endelementen auf, zwischen denen sich die Stäbe erstrecken. Die Endelemente sind durch gerade Trägerelemente untereinander verbunden, die eine hinreichende mechanische Stabilität bereit stellen.

Die Stäbe erstrecken sich vorzugsweise parallel zur Drehachse des Rotors oder der Dreschtrommel und wirken mit letzterem bzw. letzterer zusammen.

In den Zeichnungen ist ein nachfolgend näher beschriebenes Ausführungsbeispiel der Erfindung dargestellt. Es zeigt:
- Fig. 1: eine halbschematische Seitenansicht eines selbstfahrenden Mähdreschers mit einer rotierenden Gutbearbeitungseinheit;
- Fig. 2: eine perspektivische Ansicht eines Abschnitts eines erfindungsgemäßen Dreschkorbs;
- Fig. 3: eine Seitenansicht des Abschnitts des in Figur 2 gezeigten Dreschkorbs; und
- Fig. 4: eine perspektivische Teilansicht des Abschnitts des in Figur 2 gezeigten Dreschkorbs mit Drähten, die nur zum Teil installiert dargestellt sind.

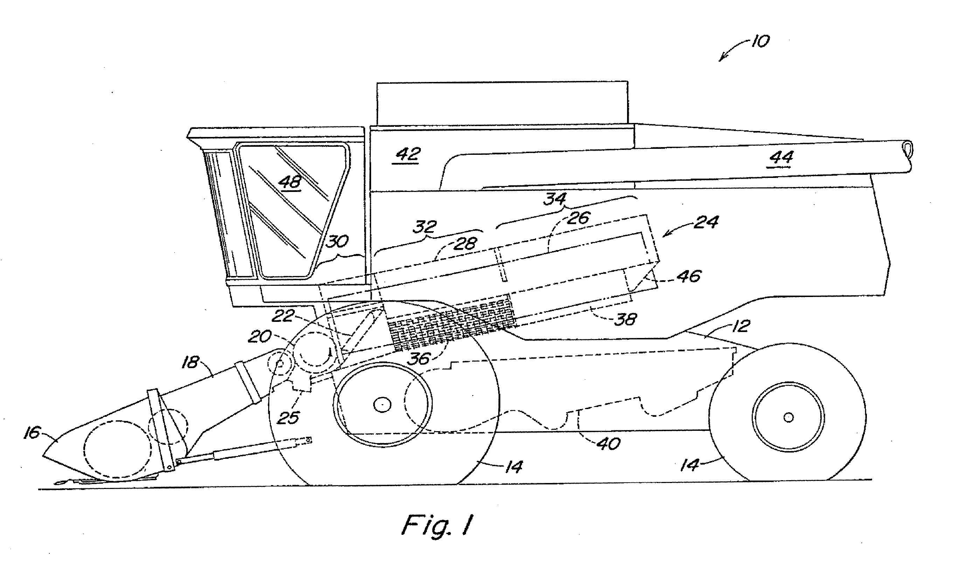

Figur 1 zeigt einen landwirtschaftlichen Mähdrescher 10 mit einer Trägerstruktur 12, die mit dem Erdboden im Eingriff befindliche Mittel aufweist, welche sich von der Trägerstruktur 12 nach unten erstrecken, wie beispielsweise Räder 14. Ein Schneidwerk 16 wird benutzt, um Erntegut zu ernten und es einem Schrägförderer 18 zuzuführen. Das geerntete Gut wird durch den Schrägförderer 18 einer Zuführtrommel 20 aufgegeben. Die Zuführtrommel 20 leitet das Erntegut durch den Einlassübergangsabschnitt 22 nach oben zur rotierenden Gutbearbeitungseinheit 24. Eine Steinfangmulde 25 befindet sich zwischen dem Schrägförderer 18 und der Zuführtrommel 20.

Die rotierende Gutbearbeitungseinheit 24 drischt und trennt das Erntegut. Sie umfasst ein rotierendes Element oder einen Rotor 26, welcher radial durch ein Gehäuse 28 eingeschlossen ist, das gemeinsam mit dem Rotor 26 einen Einlassbereich 30, einen Dreschbereich 32 und einen Trennbereich 34 definiert. Der Rotor 26 umfasst eine hohle zylindrische Trommel mit einer Vielzahl an Gutbearbeitungselementen, die in das Erntegut eingreifen und es im Gehäuse 28 herumdrehen. Der Boden des Gehäuses 28 umfasst einen Dreschkorb 36 unter dem Dreschbereich 32 und einen Trennrost 38 unter dem Trennbereich 34.

Getreide und Spreu, die durch den Dreschkorb 36 und das Trennrost 38 hindurch fallen, werden einem Reinigungssystem 40 aufgegeben. Das Reinigungssystem 40 entfernt die Spreu und führt das saubere Getreide einem (nicht gezeigten) Körnerelevator zu. Der Körnerelevator legt das saubere Getreide in einem Korntank 42 ab. Das saubere Korn im Korntank 42 kann durch einen Entladeschneckenförderer 44 auf einen Anhänger oder Lastwagen entladen werden.

Gedroschenes und von Getreide befreites Stroh wird durch einen Auslass 46 von der Gutbearbeitungseinheit 24 ausgestoßen und einer (nicht gezeigten) Auslasstrommel aufgegeben. Die Auslasstrommel wirft das Stroh wiederum an der Rückseite des Mähdreschers aus. Die Bedienung des Mähdreschers wird von einer Bedienerkabine 48 aus vorgenommen.

Die vorliegende Erfindung bezieht sich auf den Dreschkorb 36, der unter dem Dreschbereich 32 der rotierenden Gutbearbeitungseinheit 24 angeordnet ist. Der erfindungsgemäße Dreschkorb 36 kann auch als Trennrost 38 verwendet werden. Jedoch können andere Typen von Trennrosten 38 bevorzugt sein.

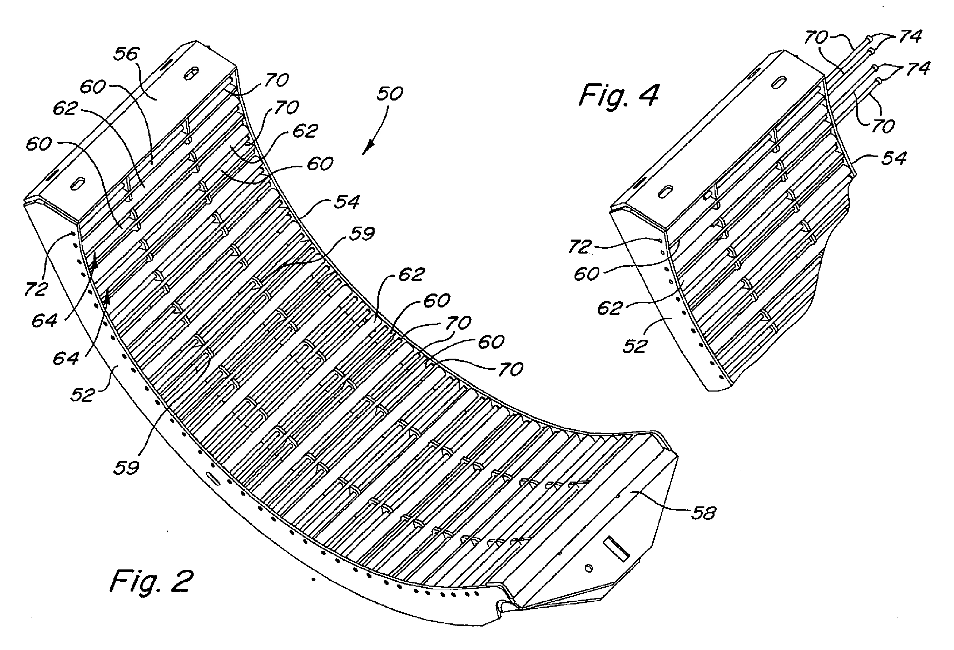

Drei Abschnitte bilden den Dreschkorb 36. Ein Abschnitt 50 ist in Figur 2 gezeigt. Der Abschnitt 50 umfasst einen Rahmen mit zwei Endelementen 52 und 54, die voneinander axial beabstandet sind. Die Endelemente 52, 54 sind gekrümmt und erstrecken sich entlang eines Teils des Umfangs des Rotors 26. Zwei gerade Trägerelemente 56, 58 erstrecken sich zwischen den gekrümmten Endelementen 52, 54 und sind daran befestigt. Gekrümmte Zwischenträger 59 sind zwischen den gekrümmten Endelementen 52, 54 angeordnet.

Das Dreschen wird durch eine Reihe gerader rechteckiger Stäbe 60 und gerader runder Stäbe 62 durchgeführt, die sich zwischen den beiden gekrümmten Endelementen 52, 54 erstrecken. Die Stäbe 62 erstrecken sich parallel zur Achse des Rotors 26. Die Stäbe 62 sind voneinander beabstandet, um zwischen sich Öffnungen 64 zu definieren, durch die Getreide hindurch treten kann. Die rechteckigen Stäbe 60 stellen eine aggressive Dreschkante bereit, während die runden Stäbe 62 eine abgerundete Dreschoberfläche bereitstellen, die in der Lage ist, Erntegut räumlich zu verteilen oder auszubreiten.

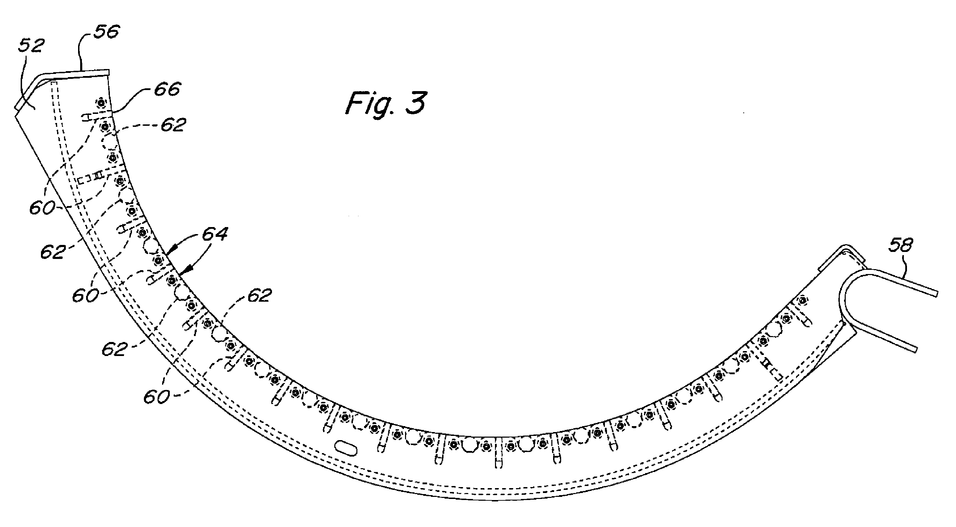

Die rechteckigen Stäbe 60 haben innere Kanten 66, die eine gewölbte innere Fläche des Dreschkorbs 36 definieren. Die runden Stäbe 62 haben eine tangential zur gewölbten inneren Fläche verlaufende Oberfläche, wie in Figur 3 gezeigt ist. Die rechteckigen Stäbe 60 und die runden Stäbe 62 sind an den gekrümmten Endelementen 52, 54 und den Zwischenträgern 59 angeschweisst.

Bei einer bevorzugten Ausführungsform sind die rechteckigen Stäbe 60 und die runden Stäbe 62 in einer alternierenden Weise angeordnet, wie in Figur 2 gezeigt ist. Es ist jedoch offensichtlich, dass die rechteckigen Stäbe 60 und die runden Stäbe 62 nicht in miteinander abwechselnder Reihenfolge angeordnet sein müssen. Beispielsweise kann ein runder Stab 62 nach zwei rechteckigen Stäben 60 folgen, oder umgekehrt, um einen Dreschkorb 36 mit einer anderen Charakteristik bereit zu stellen. Bei einer bevorzugten Ausführungsform sind die rechteckigen Stäbe 60 6 mm dick und 38 mm lang. Die runden Stäbe 62 haben einen Durchmesser von 16 mm. Die Mitten der Stäbe 60 und 62 sind etwa 28 mm beabstandet, so dass sich eine Öffnung 64 zwischen benachbarten Stäben 60 bzw. 62 ergibt, die zum Dreschen von Mais und anderer Getreide mit großen Körnern geeignet ist.

Um die Größe der Öffnung 64 zur Verarbeitung von Getreiden mit kleineren Körnern zu reduzieren, können optionale Drähte 70 in den Abschnitt 50 des Dreschkorbs 36 zwischen die Stäbe 60, 62 eingesetzt werden, wie in Figur 4 gezeigt. Die Drähte 70 sind durch Öffnungen 72 in den Endelementen 52, 54 und in den Zwischenträgern 59 eingesetzt. Die Drähte 70 sind zwischen den rechteckigen Stäben 60 und den runden Stäben 62 angeordnet. Die Drähte 70 erstrecken sich parallel zu den Stäben 60, 62 und vermindern die Größe der Öffnungen 64 des Dreschkorbs 36. Die Drähte 70 haben einen vergrößerten, nagelartigen Kopf 74 an einem Ende, das am Endelement 54 anliegt. Wenn mehrere Abschnitte 50 des Dreschkorbs 36 verwendet werden, liegt der benachbarte Abschnitt 50 des Dreschkorbs 36 an den Köpfen 74 der Drähte 70 an, um die Drähte 70 an Ort und Stelle zu halten. Der Dreschkorb 36 kann verwendet werden, wenn alle Drähte eingesetzt sind, wenn alle Drähte entfernt sind, oder wenn eine ausgewählte Anzahl von Drähten entfernt sind, um verschiedene Größen der Öffnungen 64 des Dreschkorbs 36 bereit zu stellen.

Bei einem Axialmähdrescher kann ein einzelner langer Abschnitt 50 als Dreschkorb 36 verwendet werden, oder mehrere kürzere Abschnitte 50 des Dreschkorbs 36 können hintereinander angeordnet werden, um den Dreschkorb 36 zu bilden. Wenn mehrere Abschnitte 50 des Dreschkorbs 36 bereit gestellt werden, kann jeder Abschnitt 50 mit einer anderen Anzahl von Drähten konfiguriert werden, um unterschiedliche Größen der Öffnung 64 in den unterschiedlichen Abschnitten 50 des Dreschkorbs 36 bereit zu stellen. Eine Öffnung entlang der Trägerstruktur 12 des Mähdreschers 10 erlaubt einen Zugang zum Dreschkorb 36.

Der erfindungsgemäße Dreschkorb mit sowohl runden Stäben 62 als auch rechteckigen Stäben 60 kann in einem konventionellen Mähdrescher verwendet werden, der eine quer angeordnete Dreschtrommel als Rotor aufweist. Der Zugang zum Dreschkorb kann die Möglichkeit, Drähte 70 hinzu zu fügen oder zu entfernen, jedoch einschränken. Daher kann ein Dreschkorb 36 mit einer Öffnung 64 mit nur einer (festgelegten) Größe erforderlich sein, wenn er in konventionellen Mähdreschern verwendet wird. Die Vorteile von sowohl rechteckigen als auch runden Stäben beim Verteilen des Ernteguts werden auch dann noch verfügbar sein, wenn der Dreschkorb in einem konventionellen Mähdrescher benutzt wird.

Der Dreschkorb 36 der vorliegenden Erfindung widersteht Verstopfungen durch die Wirkung der Verwendung runder Stäbe 62. Die gekrümmte Oberfläche runder Stäbe 62 widersteht von Haus aus der Ansammlung von Erntegut auf ihr. Die Kombination runder und rechteckiger Stäbe stellt eine aggressivere Dreschwirkung bereit, als bei einem nur aus runden Stäben bestehenden Dreschkorb möglich ist.

## Patentansprüche

1. Dreschkorb (36) für eine Gutbearbeitungseinheit (24), mit einer Reihe voneinander beabstandeter, parallel orientierter Stäbe (60, 62), zwischen denen Öffnungen (64) vorhanden sind, durch die Getreide hindurch strömen kann, **dadurch gekennzeichnet, dass** zwischen den Stäben (60, 62) herausnehmbare Drähte (70) angeordnet sind.

2. Dreschkorb (36) nach Anspruch 1, **dadurch gekennzeichnet, dass** Stäbe (60) mit rechteckigem Querschnitt und Stäbe mit rundem Querschnitt (62) vorhanden sind.

3. Dreschkorb (36) nach Anspruch 2, **dadurch gekennzeichnet, dass** die Stäbe (60) mit rechteckigem Querschnitt und die Stäbe (62) mit rundem Querschnitt in abwechselnder Weise angeordnet sind.

4. Dreschkorb (36) nach Anspruch 2 oder 3, **dadurch gekennzeichnet, dass** radial innere Kanten der Stäbe (60) mit rechteckigem Querschnitt eine gewölbte innere Fläche definieren, wobei die Stäbe (62) mit rundem Querschnitt eine tangential zur inneren Fläche verlaufende Oberfläche aufweisen.

5. Dreschkorb (36) nach einem der Ansprüche 1 bis 4, **dadurch gekennzeichnet, dass** die Drähte (70) einzeln herausnehmbar sind.

6. Dreschkorb (36) nach einem der Ansprüche 1 bis 5, **dadurch gekennzeichnet, dass** er aus einem oder mehreren Abschnitten (50) aufgebaut ist.

7. Dreschkorb (36) nach Anspruch 6, **dadurch gekennzeichnet, dass** der Abschnitt (50) einen Rahmen mit gekrümmten Endelementen (52, 54) aufweist, die mit zwei geraden Trägerelementen (56, 58) verbunden sind, und dass die Stäbe (60, 62) sich axial zwischen den gekrümmten Endelementen (52, 54) erstrecken.

8. Dreschkorb (36) nach Anspruch 7, **dadurch gekennzeichnet, dass** die Drähte (70) gerade sind und sich axial zwischen den gekrümmten Endelementen (52, 54) erstrecken und von benachbarten Stäben (60, 62) beabstandet sind, um die Größe der Öffnung (64) zwischen den Stäben (60, 62) zu vermindern.

9. Dreschkorb (36) nach einem der Ansprüche 1 bis 8, **dadurch gekennzeichnet, dass** die Drähte (70) gegenüber der gewölbten inneren Fläche radial nach außen versetzt sind.

10. Dreschkorb (36) nach einem der Ansprüche 1 bis 9, **dadurch gekennzeichnet, dass** sich die Stäbe (60, 62) parallel zur Drehachse eines Rotors (26) der Gutbearbeitungseinheit (24) erstrecken und mit dem Rotor (26) zusammenwirken.
